# EUROPÄISCHE PATENTSCHRIFT

(11) **EP 4 212 359 B1**
(45) Veröffentlichungstag und Bekanntmachung des Hinweises auf die Patenterteilung: **25.02.2026**
(21) Anmeldenummer: 22213681.4
(22) Anmeldetag: 15.12.2022
(51) Int. Cl.: B60C 9/07, B60C 9/17, B60C 9/04

(54) **FAHRZEUGLUFTREIFEN**
PNEUMATIC TYRE FOR VEHICLES
BANDAGE PNEUMATIQUE POUR VÉHICULE

(30) Priorität: 14.01.2022 DE 102022200364
(43) Veröffentlichungstag der Anmeldung: 19.07.2023
(73) Patentinhaber: Continental Reifen Deutschland GmbH, 30175 Hannover (DE)
(72) Erfinder: Ahmed, Owais, 30165 Hannover (DE); Berger, Christoph, 30165 Hannover (DE)
(74) Vertreter: Continental Corporation

(56) Entgegenhaltungen:
- EP-A2- 1 275 526
- DE-T5- 112017 002 411
- US-A- 2 930 425
- US-A- 3 568 749

## Beschreibung

Die Erfindung betrifft einen Fahrzeugluftreifen.

Fahrzeugluftreifen bestehen aus einer Vielzahl von Reifenbauteilen. Zu diesen Reifenbauteilen zählt eine Reifenkarkasse, die Seitenwände, der Laufstreifen, ein Reifengürtel und eine Vielzahl von weiteren Bauteilen. Alle Reifenbauteile haben eine spezielle Funktion für den Fahrzeugluftreifen, damit dieser eine entsprechende Stabilität und z. B. eine vorgegebene Materialfestigkeit aufweist. Weiterhin ist es wichtig, dass der Fahrzeugluftreifen ein möglichst geringes Gewicht besitzt, damit der Rollwiderstand gering ist.

Die DE 112017002411 T5, EP 1275526 A2, US 2930425 A und US 3568742 A offenbaren bekannte Reifenkonstruktionen mit Karkasslagen.

Der Erfindung lag die Aufgabe zugrunde, einen verbesserten Fahrzeugluftreifen bereitzustellen.

Insbesondere soll der Fahrzeugluftreifen ein möglichst geringes Gewicht aufweisen, wobei der Fahrzeugreifen gleichzeitig eine hohe Materialsteifigkeit bei Kurvenfahrten aufweisen soll.

Gelöst wird die Aufgabe durch Anspruch 1.

Ein Vorteil der Erfindung ist insbesondere darin zu sehen, dass durch die neue Reifenkonstruktion des Fahrzeugluftreifens der Fahrzeugreifen ein relativ geringes Gewicht und gleichzeitig eine hohe Materialsteifigkeit besitzt. Außerdem weist der Fahrzeugluftreifen eine hohe Stabilität und Materialfestigkeit im Bereich der Reifenkarkasse und unterhalb des Laufstreifens auf. Der Fahrzeugluftreifen besitzt ein relativ geringes Gewicht, da unterhalb des Laufstreifens nur noch eine Gürtellage oder gar keine Gürtellage vorgesehen wird.

Bei herkömmlichen Fahrzeugluftreifen umfasst der Reifengürtel mindestens eine Gürtellage. Bei der neuen Reifenkonstruktion wird maximal ein Reifengürtel mit einer Gürtellage unterhalb des Laufstreifens angeordnet.

Durch die neuartige Konstruktion der Reifenkarkasse mit der zentralen Karkasslage und der Seitenkarkasslage besitzt die Reifenkarkasse in Verbindung mit der hohen Zugfestigkeit der zentralen Karkasslage eine sehr hohe Stabilität. Die Synergieeffekte aus der neuen Karkasskonstruktion mit der hohen Zugfestigkeit für die zentrale Karkasslage führen im Ergebnis zu einem gewichtsreduzierten Fahrzeugreifen mit einer hohen Stabilität.

In einer weiteren vorteilhaften Weiterbildung der Erfindung ist vorgesehen, die zentrale Karkasslage eine Zugfestigkeit von ca. 20000 bis 25000 Newton pro Dezimeter aufweist.

Bei dieser Zugfestigkeit für die zentrale Karkasslage wird eine hohe Schräglaufsteifigkeit für den Fahrzeugreifen erzielt.

In einer weiteren vorteilhaften Weiterbildung der Erfindung ist vorgesehen, dass die Festigkeitsträger der zentralen Karkasslage bezogen auf die Umfangsrichtung des Fahrzeugluftreifens einen Winkel im Bereich von 10° bis 70°, bevorzugt im Bereich von 15° bis 55°, besonders bevorzugt im Bereich von 20° bis 35°, aufweisen.

Bei dieser Ausrichtung der Festigkeitsträger der zentralen Karkasslage wird eine hohe Stabilität für die Reifenkarkasse erzielt.

In einer weiteren vorteilhaften Weiterbildung der Erfindung ist vorgesehen, dass die Reifenkarkasse zwei oder mehr Seitenkarkasslagen und zentrale Karkasslagen umfasst.

Zwei übereinander liegende Karkasslagen erhöhen die Stabilität der Reifenkarkasse.

In einer weiteren vorteilhaften Weiterbildung der Erfindung ist vorgesehen, dass die Festigkeitsträger der zentralen Karkasslage und der Seitenkarkasslage aus Stahl, Polyamid, Nylon, Aramid, Polyester und/ oder Rayon bestehen.

Mit diesen Materialien lässt sich eine hohe Festigkeit für die Reifenkarkasse erzielen.

In einer weiteren vorteilhaften Weiterbildung der Erfindung ist vorgesehen, dass die Festigkeitsträger der zentralen Karkasslage und der Seitenkarkasslage einen Materialdurchmesser zwischen 0,1 und 2 mm aufweisen.

Dadurch kann mit den Festigkeitsträgern eine optimale Kraftübertragung auf die Reifenkarkasse erfolgen.

Erfindungsgemäss ist es vorgesehen, dass die Enden der Seitenkarkasslagen im Bereich der Unterseite von den Reifenwülsten angeordnet sind.

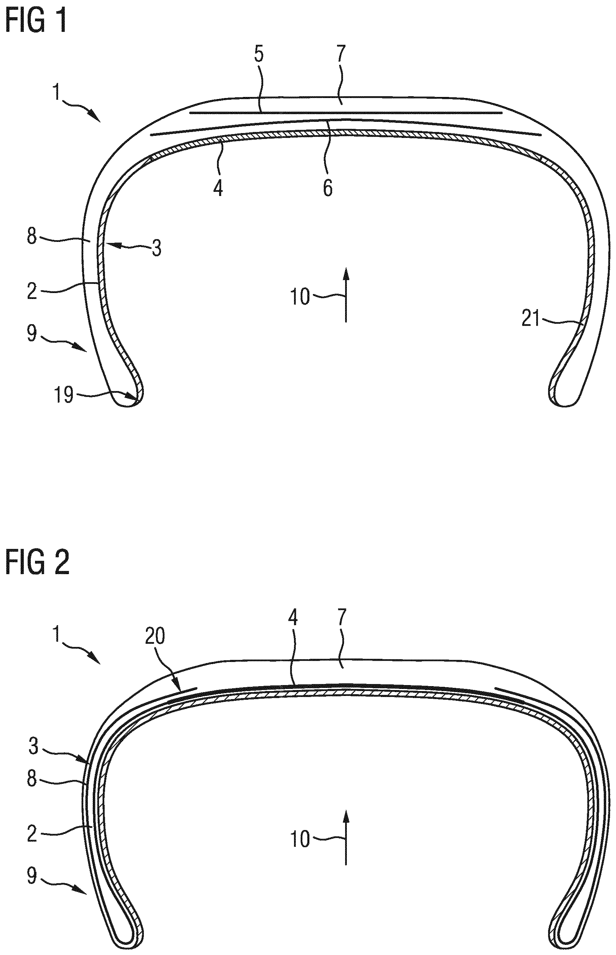

Ein entsprechendes Ausführungsbeispiel ist in der Figur 1 dargestellt. Bei dieser Ausführung wird die Reifenkarkasse im Bereich der Unterseite des Reifenwulstes 9 verankert.

Bei einem Fahrzeugreifen ist es möglich, dass die Enden der Seitenkarkasslagen unterhalb vom Laufstreifen in den Reifenschultern angeordnet sind.

Ein entsprechendes Ausführungsbeispiel ist in der Figur 2 dargestellt. Durch die doppelte Lagenanordnung im Bereich der Seitenwand wird eine sehr stabile Reifenkarkasse erzielt.

Bei einem Fahrzeugreifen ist es möglich, dass die Enden der Seitenkarkasslagen die Reifenkerne im Reifenwulst umschlingen und im Bereich der Seitenwände angeordnet sind.

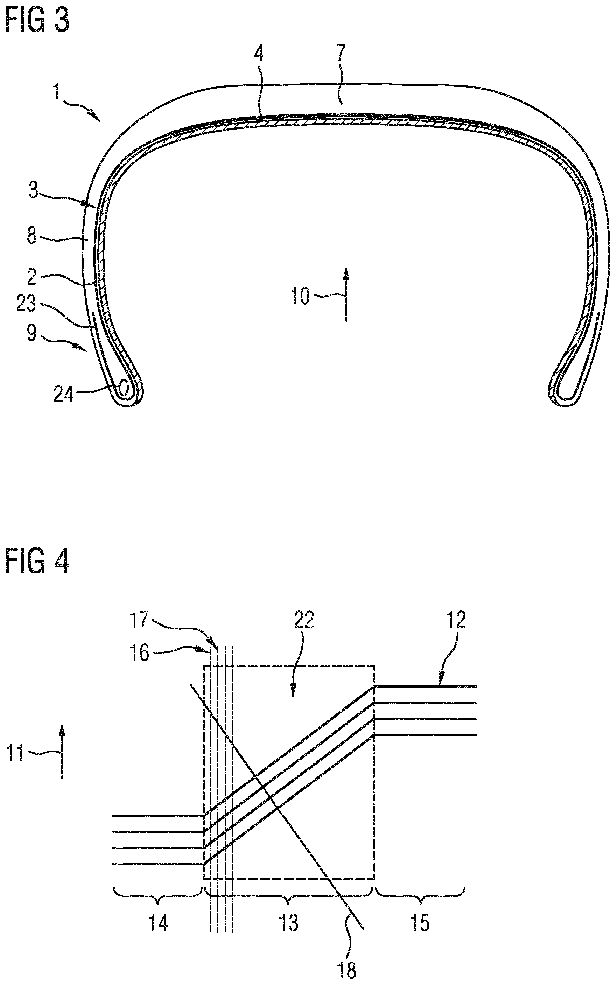

Ein entsprechendes Ausführungsbeispiel ist in der Figur 3 dargestellt. Die Enden der Seitenkarkasslage werden fest im Reifenwulst verankert.

In einer vorteilhaften Weiterbildung der Erfindung ist vorgesehen, dass die Festigkeitsträger der Gürtellage und die Festigkeitsträger der zentralen Karkasslage in Umfangsrichtung des Fahrzeugluftreifens gekreuzt angeordnet sind.

Durch die Kreuzung der Festigkeitsträger besitzt die Reifenkarkasse unterhalb des Laufstreifens eine hohe Stabilität.

Anhand von Ausführungsbeispielen wird die Erfindung im Folgenden näher beschrieben.

Es zeigen:
Fig. 1: Eine Reifenkonstruktion in einer Radialschnittansicht gemäss der Erfindung
Fig. 2: Ein weiteres Ausführungsbeispiel das nicht unter den Schutzbereich der Ansprüche fällt.
Fig. 3: Ein weiteres Ausführungsbeispiel das nicht unter den Schutzbereich der Ansprüche fällt.
Fig. 4: Eine Aufsicht auf die Ausrichtung der Festigkeitsträger der Reifenkarkasse

Die Figur 1 zeigt ein erstes Ausführungsbeispiel für die neue Reifenkonstruktion. Der Fahrzeugluftreifen 1 umfasst eine Reifenkarkasse 2 mit einer Seitenkarkasslage 3 und einer zentralen Karkasslage 4. Das besondere an der Reifenkarkasse 2 besteht darin, dass die Festigkeitsträger in der zentralen Karkasslage 4 keine radiale Ausrichtung besitzen. Die Festigkeitsträger in der Seitenkarkasslage 3 sind hingegen in radialer Richtung 10 ausgerichtet. Die Festigkeitsträger der zentralen Karkasslage 4 sind in einem Winkel zwischen 5 und 85° in Umfangsrichtung des Fahrzeugluftreifens 1 angeordnet. Die Ausrichtung der Festigkeitsträger ist insbesondere aus der Figur 4 ersichtlich. Auf der Innenseite der Reifenkarkasse 2 ist eine Reifeninnenschicht 21 angeordnet, die die Luftdichtigkeit des Fahrzeugluftreifens gewährleistet. Der Fahrzeugluftreifen weist zwei Seitenwände 8 und zwei Reifenwülste 9 auf. Oberhalb der Reifenkarkasse 2 kann optional über der zentralen Karkasslage 4 eine Verstärkungslage 5 aus einer Vielzahl von einzelnen Materialstreifen angeordnet sein. Der Fahrzeugluftreifen umfasst keinen Reifengürtel oder maximal einen Reifengürtel mit einer einzelnen Gürtellage 6. Außerdem umfasst der Fahrzeugluftreifen einen Laufstreifen 7. Die optionale Verstärkungslage 5 reicht bis in die Reifenschulter des Fahrzeugluftreifens und deckt zumindestens die zentrale Karkasslage 4 vollständig ab.

Die zentrale Karkasslage 4 besitzt eine sehr hohe Zugfestigkeit von ca. 20.000 bis 30.000 N/dm. Durch diese hohe Zugfestigkeit der zentralen Karkasslage besitzt der Fahrzeugluftreifen in Verbindung mit der neuen Karkasskonstruktion eine sehr hohe Materialsteifigkeit.

Der Fahrzeugluftreifen weist dadurch insbesondere eine hohe Schräglaufsteifigkeit auf, die für Kurvenfahrten sehr vorteilhaft ist. Durch die hohe Schräglaufsteifigkeit lässt sich das Fahrzeug insgesamt besser manövrieren. Es ist denkbar, dass sich die hohe Zugfestigkeit ebenfalls auf die Zugfestigkeit der Seitenkarkasslage erstreckt.

Die Figur 2 zeigt ein weiteres Ausführungsbeispiel. Bei dieser Reifenkonstruktion ist explizit kein Reifengürtel vorgesehen. Die Reifenkarkasse 2 umfasst eine Seitenkarkasslage 3 und eine zentrale Karkasslage 4.

Die Seitenkarkasslage 3 und die zentrale Karkasslage 4 unterscheiden sich in der Ausrichtung der Festigkeitsträger, wie es bereits bei der Figur 1 beschrieben worden ist.

Bei dieser Karkasskonstruktion reichen die Enden 20 der Seitenkarkasslage bis unterhalb der seitlichen Bereiche des Laufstreifens 7. Dadurch wird eine Doppelung der Seitenkarkasslage im Bereich der Seitenwand 8 erreicht. Durch diese Doppelung der Seitenkarkasslage wird eine hohe Materialsteifigkeit für die Reifenkarkasse erzielt.

Die Figur 3 zeigt ein weiteres Ausführungsbeispiel der Reifenkonstruktion. Die Reifenkarkasse 2 ist, wie in der Figur 1 beschrieben, aufgebaut. Bei dieser Reifenkarkasskonstruktion sind die Enden 23 der Seitenkarkasslage im Reifenwulst 9 angeordnet. Die Enden der Seitenkarkasslage 3 umschlingen dabei den schematisch dargestellten Reifenkern 24 und enden in der Seitenwand 8.

Figur 4 zeigt eine schematische Darstellung des Verlaufs der Festigkeitsträger 12 der Reifenkarkasse, der Festigkeitsträger 17 der optionale Verstärkungslage und der Festigkeitsträger 18 der optionalen Gürtellage.

Es ist ein Teilausschnitt einer Aufsicht auf die schematisch dargestellte Reifenkarkasse abgebildet.

Die Ausrichtung der Festigkeitsträger in der Seitenkarkasslage im Bereich der Seitenwände ist mit den Klammern 14 und 15 dargestellt.

Die Ausrichtung der Festigkeitsträger in der zentralen Karkasslage im Bereich unter dem Laufstreifen ist mit der Klammern 13 dargestellt.

Die Umfangsrichtung des Fahrzeugluftreifens wird durch den Richtungspfeil 11 angedeutet.

Die Festigkeitsträger 12 verlaufen im Bereich 14 und 15 der Seitenkarkasslagen in radialer Richtung und bezogen auf die Umfangsrichtung 11 in einen Winkel von ca. 90°.

Im Gegensatz hierzu verlaufen die einzelnen Festigkeitsträger 12 in der zentralen Karkasslage weiterhin parallel zueinander, besitzen jedoch eine Neigung gegenüber der Umfangsrichtung 11.

Die Festigkeitsräger in der zentralen Karkasslage bilden mit der Umfangsrichtung einen Winkel, der kleiner ist als 90°.

Im gezeigten Beispiel wird mit der Umfangsrichtung 11 ein Winkel von etwa 52° gebildet.

Die zentrale Karkasslage weist im Bereich 13 eine Zugfestigkeit von ca. 20.000 bis 30.000 N/dm auf. Die Zugfestigkeit einer Karkasslage wird im Wesentlichen durch die Zugfestigkeit der einzelnen Festigkeitsträger 12 bestimmt. Die Zugfestigkeit der Karkasslage kann insbesondere dadurch bestimmt werden, dass ein Abschnitt der Karkasslage in einem Zugversuch getestet werden. Im Normalfall sind die Zugfestigkeiten der zentralen Karkasslage und der Seitenkarkasselage gleichgroß. Sie können jedoch auch unterschiedlich sein, indem beispielsweise der Materialdurchmesser der Festigkeitsträger in der Seitenkarkasslage geändert wird. Die Zugfestigkeit von über 20.000 N/dm ist erheblich größer als bei konventionellen Fahrzeugluftreifen. Dadurch besitzt der Fahrzeugluftreifen auch ohne Gürtellagen eine sehr hohe Materialsteifigkeit, insbesondere eine sehr hohe Schräglaufsteifigkeit.

In der Figur ist ebenfalls ein schematischer Materialstreifen 16 der optionalen Verstärkungslage dargestellt. Der Materialstreifen 16 umfasst eine Vielzahl von Festigkeitsträgern 17, die in das Gummimaterial des Materialstreifens 16 eingebettet sind. Die Festigkeitsträger 17 verlaufen im Wesentlichen in Umfangsrichtung 11 des Fahrzeugluftreifens. Eine Vielzahl von Materialstreifen 16 werden auf der Reifenkarkasse oberhalb der zentralen Karkasslage aufgespult. Die Materialstreifen 16 der Verstärkungslage besitzen eine hohe Durchstichfestigkeit gegenüber spitzen Gegenständen. In der Figur ist außerdem der Verlauf der Festigkeitsträger 18 einer optionalen Gürtellage dargestellt. Die Festigkeitsträger 18 der optionalen Gürtellage verlaufen gekreuzt zu den Festigkeitsträgern der zentralen Karkasslage und der Verstärkungslage. Durch die Kreuzung der Festigkeitsträger 18 und der Festigkeitsträger 12 der Reifenkarkasse wird eine hohe Stabilität der Reifenkarkasse unterhalb des Laufstreifens bewirkt.

### Bezugszeichenliste

- 1: Fahrzeugluftreifen
- 2: Reifenkarkasse
- 3: Seitenkarkasslage
- 4: Zentrale Karkasslage
- 5: Verstärkungslage aus einer Vielzahl von Materialstreifen
- 6: Gürtellage mit maximal einer Gürtellage
- 7: Laufstreifen
- 8: Seitenwand
- 9: Reifenwulst
- 10: Radiale Richtung
- 11: Umfangsrichtung
- 12: Festigkeitsträger der Reifenkarkasse
- 13: Ausrichtung der Festigkeitsträger in der zentralen Karkasslage
- 14: Ausrichtung der Festigkeitsträger in der Seitenkarkasslage im Bereich der linken Seitenwand
- 15: Ausrichtung der Festigkeitsträger in der Seitenkarkasslage im Bereich der rechten Seitenwand
- 16: Einzelner Materialstreifen der Verstärkungslage
- 17: Festigkeitsträger der Verstärkungslage
- 18: Festigkeitsträger der Gürtellage
- 19: Enden der Seitenkarkasslagen sind im Bereich der Unterseite von den Reifenwülsten angeordnet
- 20: Enden der Seitenkarkasslage sind unterhalb vom Laufstreifen in den Reifenschultern angeordnet
- 21: Reifeninnenschicht
- 22: Bereich der mit der Verstärkungslage abgedeckt wird
- 23: Enden der Seitenkarkasslagen umschlingen die Reifenkerne im Reifenwulst
- 24: Reifenkern

## Patentansprüche

1. Fahrzeugluftreifen (1), umfassend:
a) eine Reifenkarkasse (2) mit mindestens einer Karkasslage;
wobei in der Karkasslage eine Vielzahl Festigkeitsträgern angeordnet sind,
b) einen relativ zur Reifenkarkasse (2) außenliegenden Laufstreifen (7),
c) zwei Seitenwände (8),
d) zwei Reifenwülste (9),
e) eine relativ zur Reifenkarkasse (2) radial innenliegende Reifeninnenschicht (21),
der Fahrzeugluftreifen (1) einen Reifengürtel mit maximal einer Gürtellage (6) oder keine Gürtellage aufweist,
wobei die Reifenkarkasse (2) im Bereich der Seitenwände (9) mindestens eine Seitenkarkasslage (3) mit in radialer Richtung ausgerichteten Festigkeitsträgern (12) und im Bereich unterhalb des Laufstreifens eine zentrale Karkasslage (4) aufweist,
wobei die Festigkeitsträger (12) der zentralen Karkasslage (4) in einem Winkel im Bereich von 5° bis 85° zur Umfangsrichtung (11) des Fahrzeugluftreifens angeordnet sind,
**dadurch gekennzeichnet, dass**
die zentrale Karkasslage (4) zur Erzielung einer hohen Materialsteifigkeit der Reifenkarkasse (2) eine Zugfestigkeit von ca. 20000 bis 30000 Newton pro Dezimeter aufweist;
wobei die Enden (19) der Seitenkarkasslagen (3) im Bereich der Unterseite von den Reifenwülsten (9) angeordnet sind.

2. Fahrzeugluftreifen (1) nach Anspruch 1,
**dadurch gekennzeichnet, dass**
die zentrale Karkasslage (4) eine Zugfestigkeit von ca. 20000 bis 25000 Newton pro Dezimeter aufweist.

3. Fahrzeugluftreifen nach einem der vorhergehenden Ansprüche, **dadurch gekennzeichnet, dass**
die Festigkeitsträger (12) der zentralen Karkasslage (4) bezogen auf die Umfangsrichtung (11) des Fahrzeugluftreifens (1) einen Winkel im Bereich von 10° bis 70°, bevorzugt im Bereich von 15° bis 55°, besonders bevorzugt im Bereich von 20° bis 35°, aufweisen.

4. Fahrzeugluftreifen nach einem der vorhergehenden Ansprüche, **dadurch gekennzeichnet, dass**
die Reifenkarkasse (2) zwei oder mehrere Seitenkarkasslagen (3) und zentrale Karkasslagen (4) umfasst.

5. Fahrzeugluftreifen nach einem der vorhergehenden Ansprüche, **dadurch gekennzeichnet, dass**
die Festigkeitsträger (17) der zentralen Karkasslage und der Seitenkarkasslage aus Stahl, Polyamid, Nylon, Aramid, Polyester und/ oder Rayon bestehen.

6. Fahrzeugluftreifen nach einem der vorhergehenden Ansprüche, **dadurch gekennzeichnet, dass**
die Festigkeitsträger (12) der zentralen Karkasslage (4) und der Seitenkarkasslage (3) eine Materialdurchmesser zwischen 0,1 und 2 mm aufweisen.

## Claims

1. Pneumatic vehicle tyre (1), comprising:
a) a tyre carcass (2) with at least one carcass ply;
wherein a multiplicity of reinforcements are disposed in the carcass ply,
b) a tread (7) lying on the outside in relation to the tyre carcass (2),
c) two sidewalls (8),
d) two tyre beads (9),
e) an inner tyre layer (21), lying radially on the inside in relation to the tyre carcass (2),
the pneumatic vehicle tyre (1) having a tyre belt with a maximum of one belt ply (6) or no belt ply,
wherein the tyre carcass (2) has in the region of the sidewalls (9) at least one side carcass ply (3) with reinforcements (12) aligned in the radial direction, and a central carcass ply (4) in the region below the tread,
wherein the reinforcements (12) of the central carcass ply (4) are disposed at an angle in the range of 5° to 85° in relation to the circumferential direction (11) of the pneumatic vehicle tyre,
**characterized in that**
the central carcass ply (4) has a tensile strength of approx. 20 000 to 30 000 Newtons per decimetre in order to achieve a high material stiffness of the tyre carcass (2);
wherein the ends (19) of the side carcass plies (3) are disposed in the region of the underside of the tyre beads (9).

2. Pneumatic vehicle tyre (1) according to Claim 1,
**characterized in that**
the central carcass ply (4) has a tensile strength of approx. 20 000 to 25 000 Newtons per decimetre.

3. Pneumatic vehicle tyre according to one of the preceding claims,
**characterized in that**
the reinforcements (12) of the central carcass ply (4) have with respect to the circumferential direction (11) of the pneumatic vehicle tyre (1) an angle in the range from 10° to 70°, preferably in the range from 15° to 55°, particularly preferably in the range from 20° to 35°.

4. Pneumatic vehicle tyre according to one of the preceding claims,
**characterized in that**
the tyre carcass (2) comprises two or a plurality of side carcass plies (3) and central carcass plies (4).

5. Pneumatic vehicle tyre according to one of the preceding claims,
**characterized in that**
the reinforcements (17) of the central carcass ply and of the side carcass ply consist of steel, polyamide, nylon, aramid, polyester and/or rayon.

6. Pneumatic vehicle tyre according to one of the preceding claims,
**characterized in that**
the reinforcements (12) of the central carcass ply (4) and of the side carcass ply (3) have a material diameter between 0.1 and 2 mm.

## Revendications

1. Pneumatique (1) de véhicule, comprenant :
a) une carcasse (2) de pneumatique présentant au moins une nappe carcasse ; une pluralité de renforts étant agencés dans la nappe carcasse,
b) une bande de roulement (7) située à l'extérieur par rapport à la carcasse (2) de pneumatique,
c) deux flancs latéraux (8),
d) deux talons (9) de pneumatique,
e) une couche intérieure (21) de pneumatique située radialement à l'intérieur par rapport à la carcasse (2) de pneumatique,
le pneumatique (1) de véhicule présentant une ceinture de pneumatique présentant au maximum une nappe ceinture (6) ou ne présentant pas de nappe ceinture,
la carcasse (2) de pneumatique présentant, dans la zone des flancs latéraux (9), au moins une nappe carcasse latérale (3) présentant des renforts (12) orientés dans la direction radiale et, dans la zone sous la bande de roulement, une nappe carcasse centrale (4),
les renforts (12) de la nappe carcasse centrale (4) étant agencés selon un angle dans la plage de 5° à 85° par rapport à la direction périphérique (11) du pneumatique de véhicule,
**caractérisé en ce que**
pour atteindre une rigidité de matériau élevée de la carcasse (2) de pneumatique, la nappe carcasse centrale (4) présente une résistance à la traction d'environ 20.000 à 30.000 newtons par décimètre ;
les extrémités (19) des nappes carcasse latérales (3) étant agencées dans la zone du côté inférieur des talons (9) de pneumatique.

2. Pneumatique (1) de véhicule selon la revendication 1,
**caractérisé en ce que**
la nappe carcasse centrale (4) présente une résistance à la traction d'environ 20.000 à 25.000 newtons par décimètre.

3. Pneumatique de véhicule selon l'une des revendications précédentes,
**caractérisé en ce que**
les renforts (12) de la nappe carcasse centrale (4) présentent, par rapport à la direction périphérique (11) du pneumatique (1) de véhicule, un angle dans la plage de 10° à 70°, de préférence dans la plage de 15° à 55°, de manière particulièrement préférée dans la plage de 20° à 35°.

4. Pneumatique de véhicule selon l'une des revendications précédentes,
**caractérisé en ce que**
la carcasse (2) de pneumatique comprend deux nappes carcasse latérales (3) et nappes carcasse centrales (4) ou plus.

5. Pneumatique de véhicule selon l'une des revendications précédentes,
**caractérisé en ce que**
les renforts (17) de la nappe carcasse centrale et de la nappe carcasse latérale sont en acier, polyamide, nylon, aramide, polyester et/ou rayonne.

6. Pneumatique de véhicule selon l'une des revendications précédentes,
**caractérisé en ce que**
les renforts (12) de la nappe carcasse centrale (4) et de la nappe carcasse latérale (3) présentent un diamètre de matériau entre 0,1 et 2 mm.
